# EUROPEAN PATENT APPLICATION

(11) **EP 1 445 091 A1**
(43) Date of publication of application: **11.08.2004**
(21) Application number: 04002083.6
(22) Date of filing: 30.01.2004
(51) Int. Cl.: B29C 57/08, B29C 61/00

(54) **Deformation process of an element and relative deformed element**

(30) Priority: 05.02.2003 IT MI20030188
(71) Applicant: Branca, Alfonso, 20145 Milano (IT)
(72) Inventor: Branca, Alfonso, 20145 Milano (IT)
(74) Representative: Rapisardi, Mariacristina

(57) **Abstract**

Deformation process of an element through the application of calibrated pressure on it, applied through compression means sensitive to the variation of the chemical-physical characteristics of said element when it is subjected to a predetermined temperature.

## Description

The present invention refers to a deformation process of an element and to the element thus deformed.

It is known that amongst the most widespread techniques for giving the final shape to an element there is moulding, widely exploited in particular in the field of plastic materials.

The moulding operation is, however, frequently very costly for the preparation of the mould as well as extremely long and complicated especially for making more complex shapes.

Amongst the most common drawbacks correlated with a moulding process, there is the fact that it is sometimes difficult to give a particular strength to the element selectively in some zones or along some directions of extension, and it is also sometimes equally difficult to take care of its repair once it has been damaged so as to completely restore its original efficiency.

Moreover, even when the shape of a moulded object is functional for the irremovable connection to another element, it is normally made separately and later connected, for example mechanically connected, to the other element.

In this way, the connection between the two elements not only requires an execution time but can sometimes be carried out incorrectly and in any case such as not to ensure a secure connection.

The technical task proposed of the present invention is, therefore, that of realising a process for shaping an element which allows the aforementioned technical drawbacks of the prior art to be eliminated.

In this technical task a purpose of the invention is that of realising a process for shaping an element in an extremely simple and quick manner.

Another purpose of the invention is that of realising a process for shaping an element in an extremely cost-effective manner.

Yet another purpose of the invention is that of realising a process for shaping an element which allows it to be given a particular resistance selectively in some of its zones or along some of the directions of extension.

A further purpose of the invention is that of realising a process for shaping an element that is easy to repair once it has been damaged so as to completely restore its original efficiency.

The last but not least purpose of the invention is that of realising a process for shaping an element in such a way that, when its shape is functional for irremovable connection to another element, it creates an intrinsically correct and secure connection.

The technical task, as well as these and other purposes, according to the present invention, are accomplished by realising a deformation process of an element through the application of controlled pressure on it, characterised in that said pressure is applied through compression means sensitive to the variation of the chemical-physical characteristics of said element when it is subjected to a predetermined temperature.

The present invention also discloses a coupling process between a thermoplastic material and fibres of a composite of co-mixed fibre, characterised in that a calibrated pressure is applied onto the composite realised through compression means sensitive to the variation of the chemical-physical characteristics of said thermoplastic material when it is subjected to a predetermined temperature.

Other characteristics of the present invention are defined, moreover, in the subsequent claims.

More specifically, in such a deformation process said element is made from a thermoplastic composite material and said compression means are arranged on the outer surface of the zone of said element that one wishes to deform and are suitable for applying said pressure when said thermoplastic composite material is taken to a temperature in which its chemical-physical characteristics change and reaches a predetermined degree of malleability.

Preferably, said element is made from thermoplastic composite material and said compression means comprise a tensoelastic product or a heat-shrinking product.

The deformation of the element is made possible through heating thereof up to the temperature at which it becomes malleable, then, once the element becomes malleable, the compression means act to carry out the deformation thereof.

Further characteristics and advantages of the invention shall become clearer from the description of a preferred but not exclusive embodiment of the process for deforming an element according to the finding, illustrated for indicating and not limiting purposes in the attached drawings, in which:
- figure 1 shows a first tool obtained with the process of the present invention;
- figure 2 shows a second tool obtained with the process of the present invention;
- figure 3 shows a third tool obtained with the process of the present invention;
- figure 4 shows a first threaded fitting obtained with the process of the present invention;
- figure 5 shows a second threaded fitting obtained with the process of the present invention;
- figure 6 shows a third threaded fitting obtained with the process of the present invention;
- figure 8 shows a variant embodiment of figure 7;
- figures 9a, 9b and 9c show the successive steps of the deformation process of a thermoplastic tube on a core;
- figure 10 shows an elevated side view of a boat hull obtained with the coupling process between a thermoplastic material and fibres of a composite of co-mixed fibre of the present invention;
- figure 11 shows a cross section of a boat hull obtained with the coupling process between a thermoplastic material and fibres of a composite of co-mixed fibre of the present invention.

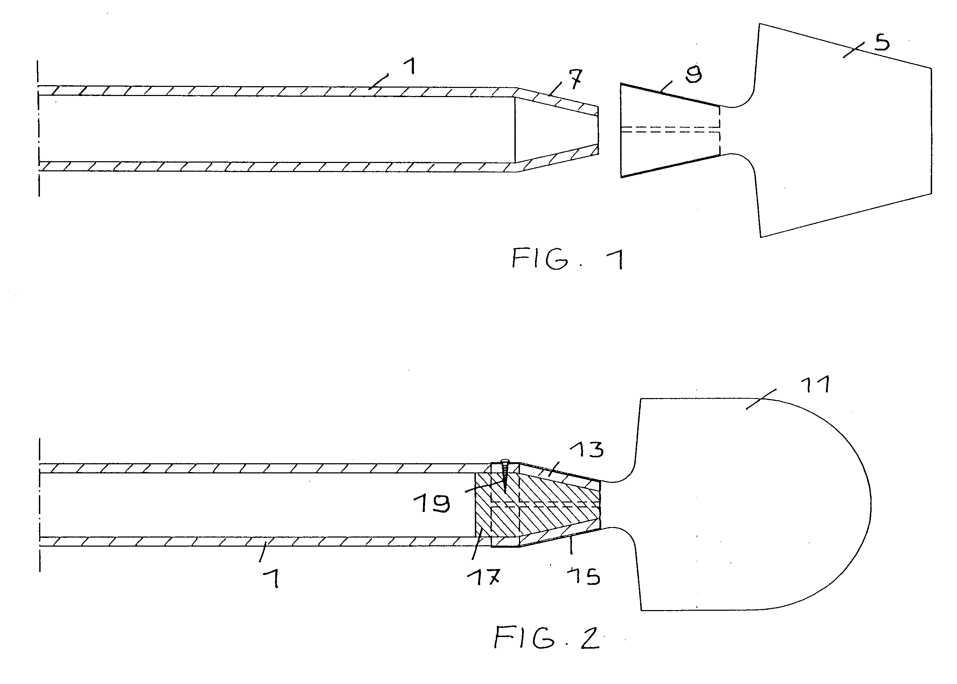

With reference to figures 1 to 7, the result of the deformation process of an element 1 through the application of calibrated pressure on it, and applied through compression means 3 sensitive to the variation of the chemical-physical characteristics of the element 1 when it is subjected to a predetermined temperature.

The element 1, in particular, is made from thermoplastic material and the compression means 3 are arranged on the outer surface of the zone of the element 1 that one wishes to deform and are suitable for applying a pressure when the thermoplastic composite element 1 is taken to the predetermined temperature at which it reaches a predetermined degree of malleability.

The deformed element 1 is preferably made from thermoplastic composite material comprising at least one fibre, in particular a plurality of glass, carbon, Kevlar, natural or metal fibres or a mixture thereof, embedded in a resin matrix.

Alternatively, the thermoplastic composite element 1 can be made from a thermosetting composite material before the polymerisation step.

The compression means 3 can, however, be made from a heat-shrinking product or from a tensoelastic product supplied in the form of wires, sheets, bands, etc.

In all of figures 1 to 7, the thermoplastic composite element 1, before its final deformation, is originally in the form of a tube deriving from a pultrusion process.

In figure 1 the thermoplastic tubular element 1 acts as a shovel handle 5 and has a tapered end part 7 which is shaped as the inner side of the conical engagement 9 of the shovel 5.

In this case it is the end part of the original thermoplastic tube that is deformed according to the deformation process according to the present invention to carry out the tapering.

The element 1 can have, inside of it, a core for configuring it with a shape matching it, and the core can be made from different materials including wood, can be removable or fixed, or an integral part of another element such as a tool or connection member.

The core can be made from plastic and can be fixedly connected to the element 1 through a chemical link due to the compactability of the plastic with the resin matrix of the composite.

In figure 2 the thermoplastic composite tubular element 1 acts as a shovel handle 11 and has a tapered end part 13 which is inserted onto the inner side of the conical engagement 15 of the shovel 11 and which is deformed according to the deformation process according to the present invention to be irremovably configured as a core formed by a wooden chuck 17 which acts as a reinforcement and/or as a seat for attachment elements 19 of the shovel 11 to the handle 1.

In figure 3 the thermoplastic composite tubular element 1 acts as a shovel handle and has a tapered end part 21 which is deformed according to the deformation process according to the present invention to be irremovably configured as a core 23 which forms an integral part of the shovel 25.

The core on which the thermoplastic composite element 1 is deformed can also have a surface configuration suitable for realising a deformation zone with the same configuration only on the inner surface of the thermoplastic composite element, or on the outer and inner surface thereof.

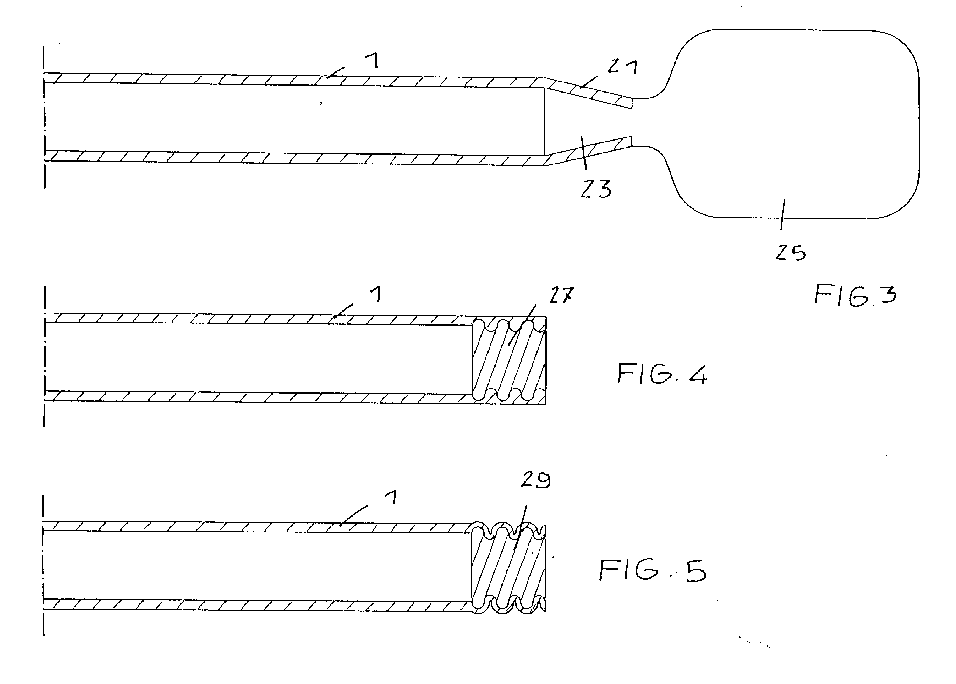

Thus, whereas in figure 4 the threaded core 27 of the thermoplastic composite element 1 realises a threading only of the inner surface of an end portion of the thermoplastic composite element 1, in figure 5 the threaded core 29 of the thermoplastic composite element 1 realises a threading both of the inner surface and of the outer surface of an end portion of the thermoplastic composite element 1.

In figure 6 the thermoplastic composite element 1 forms an integral part of a threaded element 33 for fitting to another element (not shown), for example a valve assembly or other.

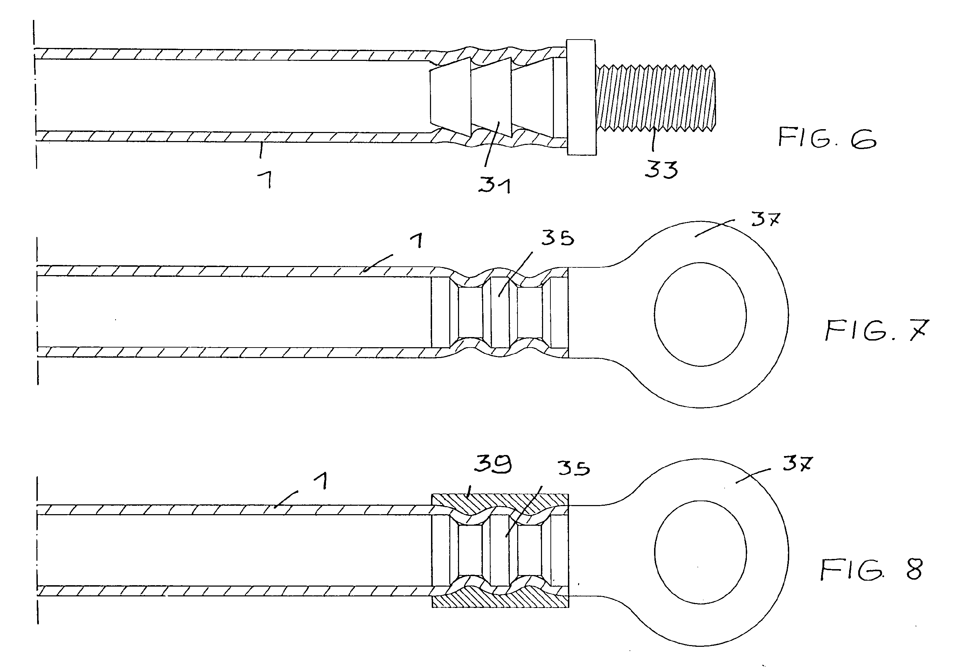

In figure 7 the core 35 of the thermoplastic composite element forms and integral part of a member 37 to which the thermoplastic composite element 1 is joined.

The deformation zone can be coated with a thermoplastic material, in particular a thermoplastic composite material, having an arrangement of the fibres perpendicular to those of the thermoplastic composite element 1 in order to reinforce its mechanical strength.

Regarding this, in figure 8 a band 37 of thermoplastic composite material is illustrated having fibres orientated preferably along the direction of extension of the band, and circumferentially wrapped around the thermoplastic composite element 1 having fibres orientated preferably along the direction of extension of the thermoplastic composite element 1.

The band 37 is applied at the core 35 to increase the resistance to flexing of the thermoplastic composite element 1 at the joining zone to the member 37.

To take the thermoplastic composite element to the temperature at which it becomes malleable, it can be heated directly using a hot air gun, an oven or an electric heater, but even more advantageously if a core of the thermoplastic composite element is foreseen and if the core is made from thermally conductive material, just the core can be directly heated with further simplification of the entire deformation process.

For the deformation of the thermoplastic composite element the heat shrinking or tensoelastic product, in the form of a sheath, band or cap, is uniformly associated with the outer surface of the thermoplastic composite element at a temperature lower than the predetermined temperature at which the thermoplastic composite element becomes malleable.

If the compression means are formed from a heat-shrinking product, this can be activated at an activation temperature even close to the predetermined temperature, when the thermoplastic composite element is in a partially malleable state.

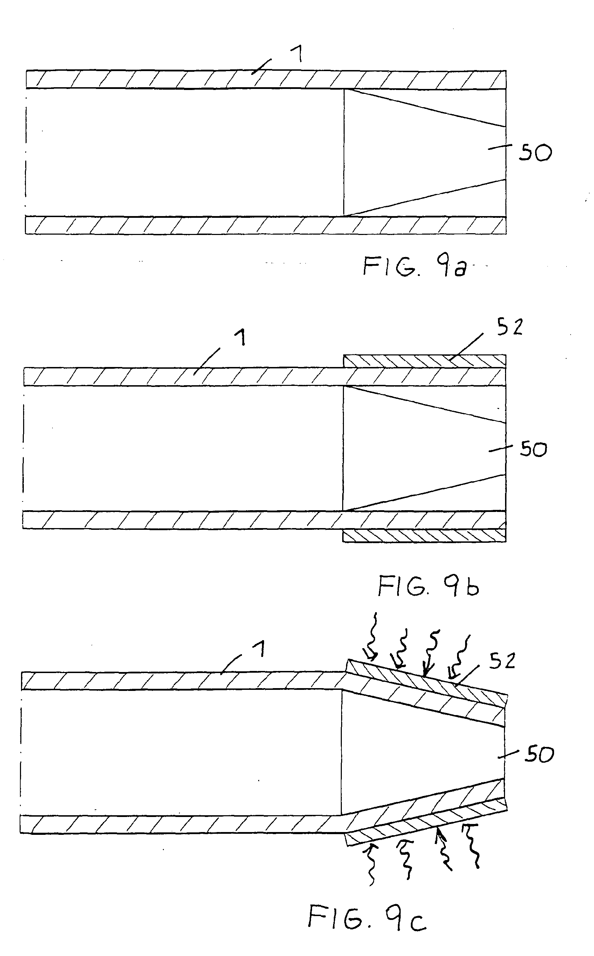

An example of the successive steps of the deformation process is shown in figures 9a, 9b and 9c. In particular, figure 9a shows a thermoplastic composite tubular element 1 equipped with a conical core 50. In figure 9b, outside of the zone of the element 1 to be deformed, a layer of a heat-shrinking product 52 is wrapped. In figure 9c the zone of the element 1 to be deformed is subjected to heating (indicated by arrows) so that once the softening temperature has been reached the deformation zone progressively and perfectly adapts onto the conical core 50 by the action of the heat shrinking product 52.

Hereafter, we display a detailed example of the deformation process.

### EXAMPLE 1

Formation of a tapered object.

A tube of thermoplastic composite material having an outer diameter equal to 15 mm and an inner diameter equal to 12 mm is manufactured through a pultrusion process according to the one disclosed in patent application no. MI2001A001710. The matrix consists of rigid thermoplastic polyurethane.

The tube is arranged on a chuck which has a tapering of the diameter from 12 mm to 8 mm. The tube is wrapped with a band of a heat shrinking commercial polyester produced by Dunstone. The band is wrapped spirally so that the subsequent wrapping overlaps the previous one. The ends of the band are secured with commercial adhesive tape. The combination of the composite tube, the steel chuck and the band is heated using a commercial hot air gun for about 3 minutes. When the band heats up it starts to shrink radially compressing the tube. When the tube heats up the thermoplastic matrix starts to soften up at the softening temperature and starts to deform under the compressing action of the band adapting itself to the tapered zone of the chuck. At the end of the deformation the band and the chuck are left to cool down. After the removal of the band the chuck is removed and the tube has the desired tapering.

The present invention also discloses a coupling process between a thermoplastic material and fibres of a composite of co-mixed fibre, wherein a calibrated pressure is applied onto the composite realised through compression means sensitive to the variation of the chemical-physical characteristics of the thermoplastic material of the composite when it is subjected to a predetermined temperature.

The compression means are arranged on the outer surface of the composite of co-mixed fibre and act when the thermoplastic material of the composite is taken to a temperature at which its chemical-physical characteristics change in such a way as to determine the impregnation thereof with the fibres of the composite.

The composite of co-mixed fibre can have one or more layers that can be applied to a mould for the formation of an element.

The layers of the composite can have different orientations and can also have at least one insert placed between them.

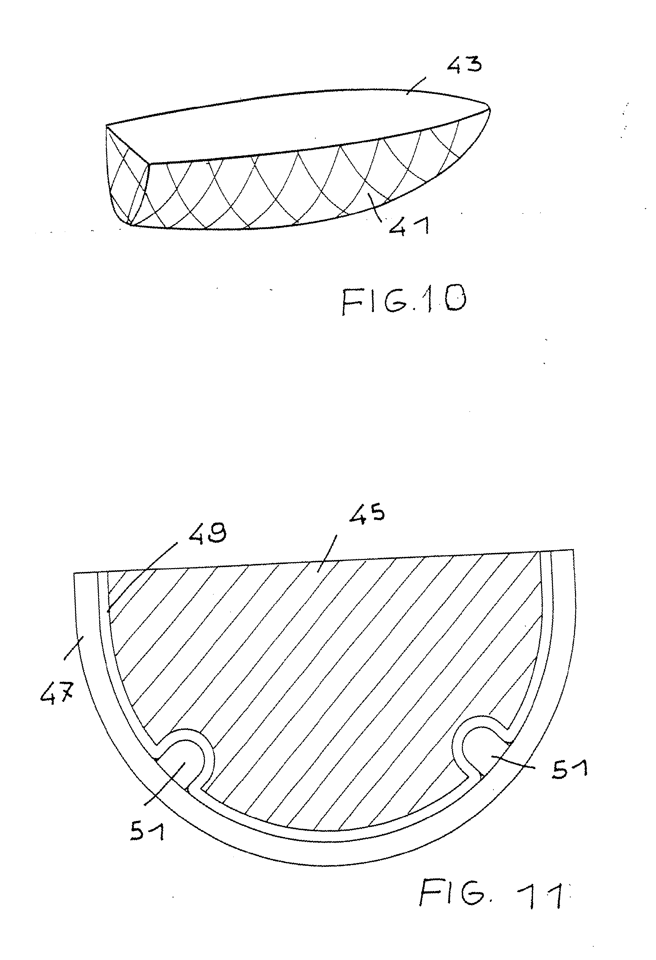

Thus, figure 10 shows the formation of the boat hull obtained by laying down layers 41 of composite of co-mixed fibre on a mould 43, and coating such layers with a film of a heat shrinking product which determines the consolidation of the underlying layers once the predetermined temperature has been reached, obtained through heating in an oven, with a hot air gun, with an electric heater or other.

Advantageously, the various layers can be applied with the fibres orientated along predetermined directions according to the main directions of action of loads on the hull. The heating can also be carried out by blowing hot air inside the mould, especially if the mould is made from metal, so as to efficiently conduct the heat towards the plastic.

A greater rigidity and/or mechanical strength can thus be realised at critical areas of the hull.

The content of the composite of co-mixed fibre, in which the thermoplastic material can in turn be a composite of fibres and resin, can be optimised by varying the fibre content as desired. To obtain greater mechanical strength and rigidity the fibre content is accentuated, for example carbon or glass fibres. On the other hand, in the opposite case, if high rigidity and mechanical strength is not necessary, the resin content is accentuated.

In figure 11 the boat hull is obtained by arranging on a mould 45 two layers 47 and 49 of co-mixed fibre composite between which a pair of reinforcing inserts 31 is positioned.

The present invention also discloses a process for realising an element on a mould, characterised in that said element is made from thermoplastic material that can be applied to the mould and on which calibrated pressure is applied through compression means suitable for applying said pressure when said thermoplastic composite element is taken to a temperature at which its chemical-physical characteristics change and it reaches a predetermined degree of malleability.

In this case, the thermoplastic material is preferably a pre-impregnated composite.

Hereafter, we display a detailed example of the process for realising a hull.

### EXAMPLE 2

Creation of a three-dimensional shell with a band of pre-impregnated composite material.

A wooden chuck is manufactured having the shape of a hull in miniature. Strips of a band of pre-impregnated thermoplastic composite material with a thickness of 0.5 mm and width of 20 mm are arranged on the curved section of the hull so as to form a first complete coating layer orientated at 45° with respect to the longitudinal axis of the hull. The composite band has a polypropylene matrix. The composite band is temporarily secured with adhesive tape. A second coating layer is applied in the same way but with orientation of -45° with respect to the longitudinal axis of the hull. The hull is then coated with many overlapping layers of heat shrinking polyester band. The wrapping of the heat-shrinking band is irregular due to the three-dimensional shape of the hull. The combination of the composite band, the wooden chuck and the heat-shrinking band is heated for about 3 minutes using a commercial hot air gun. When the heat-shrinking band heats up it starts to shrink radially compressing the thermoplastic coating layers. When the thermoplastic layers heat up their thermoplastic matrix starts to soften up at the softening temperature and they tend to combine into a single piece having the shape of the hull. At the end of the deformation the heat shrinking band and the chuck are left to cool down. After the removal of the heat shrinking band the chuck is removed and the thermoplastic coating layers have become set in the desired shape of the hull.

The invention thus conceived is susceptible to numerous modifications and variants, all of which are covered by the inventive concept; moreover, all of the details can be replaced with technically equivalent element.

## Claims

1. Deformation process of an element through the application of controlled pressure on it, **characterised in that** said pressure is applied through compression means sensitive to the variation of the chemical-physical characteristics of said element when it is subjected to a predetermined temperature.

2. Coupling process between a thermoplastic material and fibres of a composite of co-mixed fibre, **characterised in that** a calibrated pressure is applied onto the composite realised through compression means sensitive to the variation of the chemical-physical characteristics of said thermoplastic material when it is subjected to a predetermined temperature.

3. Process according to one or more of the previous claims, **characterised in that** said compression means are made from a heat-shrinking product.

4. Process according to one or more of the previous claims, **characterised in that** said compression means are made from a tensoelastic product.

5. Process according to one or more of the previous claims, **characterised in that** said element is made from thermoplastic material.

6. Process according to one or more of the previous claims, **characterised in that** said element is made from thermoplastic composite material.

7. Process according to one or more of the previous claims, **characterised in that** said thermoplastic composite material comprises at least one glass, carbon, Kevlar, natural or metal fibres or a mixture thereof.

8. Process according to one or more of the previous claims, **characterised in that** said thermoplastic composite material is made with a thermosetting composite material before the polymerisation step.

9. Deformation process of an element through the application of calibrated pressure on it, **characterised in that** said element is made from thermoplastic material and **in that** said pressure is realised through compression means arranged on the outer surface of the zone of the element that one wishes to deform and suitable for applying said pressure when said thermoplastic composite element is taken to a temperature at which its chemical-physical characteristics change and it reaches a predetermined degree of malleability.

10. Process for realising an element on a mould, **characterised in that** said element is made from thermoplastic material that can be applied to the mould and on which calibrated pressure is applied through compression means suitable for applying said pressure when said thermoplastic composite element is taken to a temperature at which its chemical-physical characteristics change and it reaches a predetermined degree of malleability.

11. Coupling process between a thermoplastic material and fibres of a composite of co-mixed fibre, **characterised in that** a calibrated pressure is applied onto the composite realised through compression means arranged on the outer surface of said composite of co-mixed fibre and suitable for applying said pressure when said thermoplastic material is taken to a temperature at which its chemical-physical characteristics change in such a way as to determine the impregnation thereof with said fibres.

12. Deformation process of an element according to one or more of the previous claims, **characterised in that** said element has a core inside of it to configure it with a shape matching it.

13. Deformation process of an element according to one or more of the previous claims, **characterised in that** said core is removable.

14. Deformation process of an element according to one or more of the previous claims, **characterised in that** said core is wooden and is integrally connected to said element.

15. Deformation process of an element according to one or more of the previous claims, **characterised in that** said core is made from plastic and is fixedly connected to said element through a chemical link due to the compatibility of plastic with the resin matrix of the composite.

16. Deformation process of an element according to one or more of the previous claims, **characterised in that** said core is an integral part of another element such as a tool or connection member.

17. Deformation process of an element according to one or more of the previous claims, **characterised in that** said core is made from a thermally conductive material to take said element to said predetermined temperature.

18. Deformation process of an element according to one or more of the previous claims, **characterised in that** said core has a surface configuration suitable for realising a deformation zone with the same configuration only on the inner surface of said element.

19. Deformation process of an element according to one or more of the previous claims, **characterised in that** said core has a surface configuration suitable for realising a deformation zone with the same configuration on the inner and outer surface of said element.

20. Deformation process of an element according to one or more of the previous claims, **characterised in that** said deformation zone is coated with a thermoplastic composite material having arrangement of the fibres perpendicular to those of said element.

21. Deformation process of an element according to one or more of the previous claims, **characterised in that** said heat shrinking or tensoelastic product is in the form of a sheath, band or cap, to be uniformly associated with the outer surface of said element at a temperature lower than said predetermined temperature.

22. Deformation process of an element according to one or more of the previous claims, **characterised in that** said heat shrinking product is activated at an activation temperature close to said predetermined temperature at which said element becomes malleable.

23. Coupling process according to one or more of the previous claims, **characterised in that** said composite of co-mixed fibre has one or more layers that can be applied to a mould.

24. Coupling process according to one or more of the previous claims, **characterised in that** at least one insert is present between the layers of said co-mixed fibre composite.

25. Coupling process according to one or more of the previous claims, **characterised in that** said layers of said co-mixed fibre composite have different orientations of the fibres.

26. Deformed element, **characterised in that** it is made from thermoplastic material and **in that** it has a deformation obtained through the action of a heat shrinking or tensoelastic product associated with the outer surface.

27. Use of a heat shrinking or tensoelastic product associated with the outer surface of a thermoplastic composite element for its deformation.

28. Deformation process of an element as described and claimed.
